(19)

Europäisches
Patentamt
European
Patent Office
Office européen
des brevets

(11) **EP 3 267 682 A1**

(12) **EUROPEAN PATENT APPLICATION**

(43) Date of publication:
**10.01.2018 Bulletin 2018/02**

(51) Int Cl.:
*H04N 13/00* (2018.01)    *G06T 7/00* (2017.01)
*H04N 19/597* (2014.01)

(21) Application number: **16178137.2**

(22) Date of filing: **06.07.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Technologies Oy
02610 Espoo (FI)**

(72) Inventor: **AFLAKI BENI, Payman
33720 Tampere (FI)**

(74) Representative: **Nokia EPO representatives
Nokia Technologies Oy
Karaportti 3
02610 Espoo (FI)**

(54) **MULTIVIEW VIDEO ENCODING**

(57)    It is disclosed inter alia a method comprising determining a depth map image of a first view texture image and a depth map image of a second view texture image from ranging information for the first view texture image and the second view texture image respectively, then mapping the foreground and background regions of the first and second view texture image to the respective first and second view texture images encoding at least part of the second view texture image by selecting at least one second view texture pixel of the background region of the second view texture image and substituting the value of the at least one second view texture pixel with a value of a corresponding at least one first view texture pixel from the encoded first view texture image.

FIG. 5

EP 3 267 682 A1

**Description**

<u>Field</u>

The present invention relates to video encoding, and in particular, but not exclusively to multiview video encoding.

<u>Background</u>

Digital or stereoscopic viewing of still and moving images have become more common place with the availability of equipment to view 3D (three dimensional) films. Theatres are offering 3D movies based on viewing the movie with special glasses that ensure the viewing of different images for the left and right eye for each frame of the film. The same approach has been brought to home use with 3D-capable players and television sets. In practice the film consists of two separate views of the same scene, in which each view is taken from a different perspective corresponding to the left eye and right eye. These views are typically created with a camera configured to record the scene as two separate views, with each view taken from slightly different perspectives. The Human Visual System (HVS) then forms a 3D view of the scene when the images corresponding to the left and right perspectives are each presented to the respective left and right eyes.

A Multiview video system can represent different projections of the same scene taken from many different viewpoints, in which each projection is synchronously captured by one of a number of multiple cameras located separately from each other.

However, stereoscopic and Multiview digital technologies have the drawback in that they require relatively large amounts of bandwidth in order to transmit and store the different projections which make up the Multiview experience. This drawback can be accentuated with the proliferation of 4K and higher resolution broadcast content, as each projection or image making up the Multiview experience places a greater burden on the current broadcasting infrastructure.

<u>Summary</u>

There is provided according to the application a method comprising; determining a depth map image of a first view texture image and a depth map image of a second view texture image from ranging information for the first view texture image and the second view texture image respectively; partitioning the depth map image of the first view texture image and second view texture image each into a foreground region and a background region; mapping the foreground and the background regions of the first depth map of the first view texture image to the first view texture image; mapping the foreground and the background regions of the second depth map of the second view texture image to the second view texture image; encoding the first view texture image; and encoding at least part of the second view texture image by selecting at least one second view texture pixel of the background region of the second view texture image and substituting the value of the at least one second view texture pixel with a value of a corresponding at least one first view texture pixel from the encoded first view texture image.

The corresponding at least first view texture pixel may be a pixel from the background region of the first view texture image.

The at least one second view texture pixel may have a spatial location in the background region of the second view texture image which is the same as a spatial location of the corresponding at least one first view texture pixel in the background region of the first view texture image.

The partitioning of the depth map image for the first view texture image and second view texture image each into a foreground region and a background region may comprise that at least one pixel of a depth map image meets a threshold value and classifying the at least one pixel as a background region of the depth map image.

Also the partitioning of the depth map image for the first view texture image and second view texture image each into at least one foreground region and at least one background region may comprise: comparing at least one pixel value of a depth map image against a threshold value; determining that the at least one pixel value is below the threshold value; and classifying the at least one pixel value with at least one background region of the depth map image.

The threshold may represent a pixel value of the depth map image at which there is no perceived disparity between the first view texture image and the second view texture image.

The threshold may be based on a weighted mean pixel value of the depth map image.

The threshold may be based on a weighted median pixel value of the depth map image.

The threshold may be based on the difference between a maximum pixel value and a minimum pixel value of the depth map image.

The threshold may be based on a histogram of pixel values of the depth map image.

The first view texture image and the second view texture image can be captured by a stereoscopic camera arrangement.

According to a further aspect there is provided an apparatus configured to: determine a depth map image of a first view texture image and a depth map image of a second view texture image from ranging information for the first view texture image and the second view texture image respectively; partition the depth map image of the first view texture image and second view texture image each into a foreground region and a background region; map the foreground and the background regions of the first depth map of the first view texture image to the first view texture image; map the foreground and the background regions of the second depth map of the second view texture image to the second view texture image; encode the first view texture image; and encode at least part of the second view texture image by the apparatus being configured to select at least one second view texture pixel of the background region of the second view texture image and substitute the value of the at least one second view texture pixel with a value of a corresponding at least one first view texture pixel from the encoded first view texture image.

The corresponding at least first view texture pixel may be a pixel from the background region of the first view texture image.

The at least one second view texture pixel may have a spatial location in the background region of the second view texture image which is the same as a spatial location of the corresponding at least one first view texture pixel in the background region of the first view texture image.

The apparatus configured to partition the depth map image for the first view texture image and second view texture image each into a foreground region and a background region may comprise that at least one pixel of a depth map image meets a threshold value and classifying the at least one pixel as a background region of the depth map image.

The apparatus configured to partition the depth map image for the first view texture image and second view texture image each into at least one foreground region and at least one background region may be configured to: compare at least one pixel value of a depth map image against a threshold value; determine that the at least one pixel value is below the threshold value; and classify the at least one pixel value with at least one background region of the depth map image.

The threshold may represent a pixel value of the depth map image at which there is no perceived disparity between the first view texture image and the second view texture image.

The threshold may be based on a weighted mean pixel value of the depth map image.

The threshold may be based on a weighted median pixel value of the depth map image.

The threshold may be based on the difference between a maximum pixel value and a minimum pixel value of the depth map image.

The threshold may be based on a histogram of pixel values of the depth map image.

The first view texture image and the second view texture image can be captured by a stereoscopic camera arrangement.

According to another aspect there is provided an apparatus comprising at least one processor and at least one memory including computer program code, the at least one memory and the computer program code configured to, with the at least one processor, cause the apparatus to: determine a depth map image of a first view texture image and a depth map image of a second view texture image from ranging information for the first view texture image and the second view texture image respectively; partition the depth map image of the first view texture image and second view texture image each into a foreground region and a background region; map the foreground and the background regions of the first depth map of the first view texture image to the first view texture image; map the foreground and the background regions of the second depth map of the second view texture image to the second view texture image; encode the first view texture image; and encode at least part of the second view texture image by the apparatus being caused to select at least one second view texture pixel of the background region of the second view texture image and substitute the value of the at least one second view texture pixel with a value of a corresponding at least one first view texture pixel from the encoded first view texture image.

The corresponding at least first view texture pixel may be a pixel from the background region of the first view texture image.

The at least one second view texture pixel may have a spatial location in the background region of the second view texture image which is the same as a spatial location of the corresponding at least one first view texture pixel in the background region of the first view texture image.

The apparatus caused to partition the depth map image for the first view texture image and second view texture image each into a foreground region and a background region may comprise that at least one pixel of a depth map image meets a threshold value and classifying the at least one pixel as a background region of the depth map image.

The apparatus caused to partition the depth map image for the first view texture image and second view texture image each into at least one foreground region and at least one background region may be further caused to: compare at least one pixel value of a depth map image against a threshold value; determine that the at least one pixel value is below the threshold value; and classify the at least one pixel value with at least one background region of the depth map image.

The threshold may represent a pixel value of the depth map image at which there is no perceived disparity between the first view texture image and the second view texture image.

The threshold may be based on a weighted mean pixel value of the depth map image.

The threshold may be based on a weighted median pixel value of the depth map image.

The threshold may be based on the difference between a maximum pixel value and a minimum pixel value of the depth map image.

The threshold may be based on a histogram of pixel values of the depth map image.

The first view texture image and the second view texture image can be captured by a stereoscopic camera arrangement.

According to a yet further aspect there is provided a computer-readable medium having computer-readable code stored thereon, the computer readable code, when executed by a least one processor, causing an apparatus to: determine a depth map image of a first view texture image and a depth map image of a second view texture image from ranging information for the first view texture image and the second view texture image respectively; partition the depth map image of the first view texture image and second view texture image each into a foreground region and a background region; map the foreground and the background regions of the first depth map of the first view texture image to the first view texture image; map the foreground and the background regions of the second depth map of the second view texture image to the second view texture image; encode the first view texture image; and encode at least part of the second view texture image by the apparatus being caused to select at least one second view texture pixel of the background region of the second view texture image and substitute the value of the at least one second view texture pixel with a value of a corresponding at least one first view texture pixel from the encoded first view texture image.

Brief Description of Drawings

For better understanding of the present application and as to how the same may be carried into effect, reference will now be made by way of example to the accompanying drawings in which:

Figures 1a, 1b, 1c and 1d shows schematically an arrangement for capturing and displaying a stereo image to a user;
Figure 2a shows a system and apparatus for stereo viewing;
Figure 2b shows a stereo camera device for stereo viewing;
Figure 2c shows a head-mounted display for stereo viewing;
Figure 2d illustrates a camera arrangement for capturing stereoscopic video;
Figure 2e illustrates a further camera arrangement for capturing stereoscopic video;
Figure 3 shows schematically an electronic device in which embodiments can be deployed;
Figure 4 shows schematically the partition of a stereoscopic image into foreground and background regions according to embodiments; and
Figure 5 shows a flow diagram illustrating the process of encoding a stereoscopic image according to embodiments;

Description of Some Embodiments

In the case of Multiview video sequences, the content of one view can be used as a base for inter-prediction of further views of the sequence, thereby enabling the similarity between the base view and the further views to be exploited. One factor which can determine how well the inter-prediction process exploits similarities between the base view and a further view is the distance of objects within the viewing scene. For instance if an object within a view is relatively close, then the position of the image object within each camera can vary greatly from one camera to the next. However, if the object within the view is located further away from the cameras then the displacement of the image object relative to each camera will be less. In other words, objects closer to the Multiview cameras will be captured with a larger disparity between the multiple images of the scene than objects which are further away from the cameras. Consequently for scenes which have many foreground objects, the inter-prediction across the various different views of the Multiview sequence will have a less advantageous effect since it will be more difficult to exploit the similarities between the captured images of the scene. Conversely scenes which predominantly comprise background objects allow for greater exploitation of the similarities between the captured images of the scene.

The perception of depth within a rendered stereoscopic image will generally increase with the distance of the actual viewing region or object from the cameras until a point is reached where any further increase in the distance of the viewing region or object will not lead to a corresponding increase to the perceived depth of the region or object in the rendered stereoscopic image. At this point the HVS will not perceive a further difference between the associated depth values of pixels across the differing captured views. With regards to stereo imaging systems, these regions within a left and right texture image pair may be perceived as being very similar such that they would appear as two identical 2D images.

However, the actual depth values of corresponding pixels between each image view can still exhibit a disparity.

For example, there can be a difference in corresponding pixels depth values between a left view depth map image and a right view depth map image of a stereoscopic image pair for those regions in which there is no further change to the discernible depth in the corresponding region of the rendered stereoscopic image. Consequently, since there is an actual disparity between the pixel depth values of a left view depth map image and a right view depth map image an inter-prediction Multiview (or stereoscopic) video coding system can still attempt to encode this difference, thereby resulting in a use of coding bandwidth which would not provide any perceived benefit in the synthesised Multiview (or rendered stereoscopic image.)

The following describes in more detail how regions of a Multiview image (in particular left and right image of a stereoscopic imaging system) can be exploited in order to improve the encoding efficiency when corresponding depth map pixel values across the images of the Multiview camera system are at the point of no discernible increase in depth perception by the HVS.

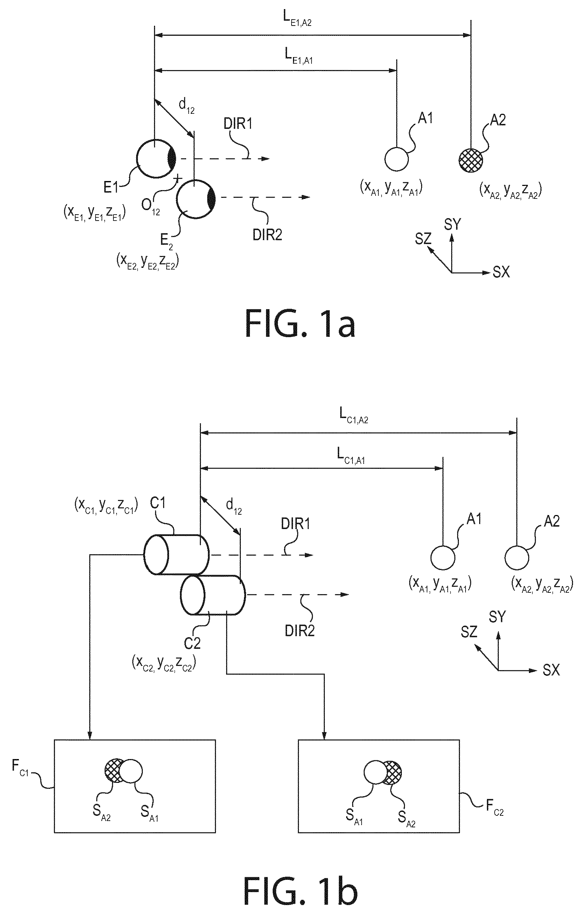

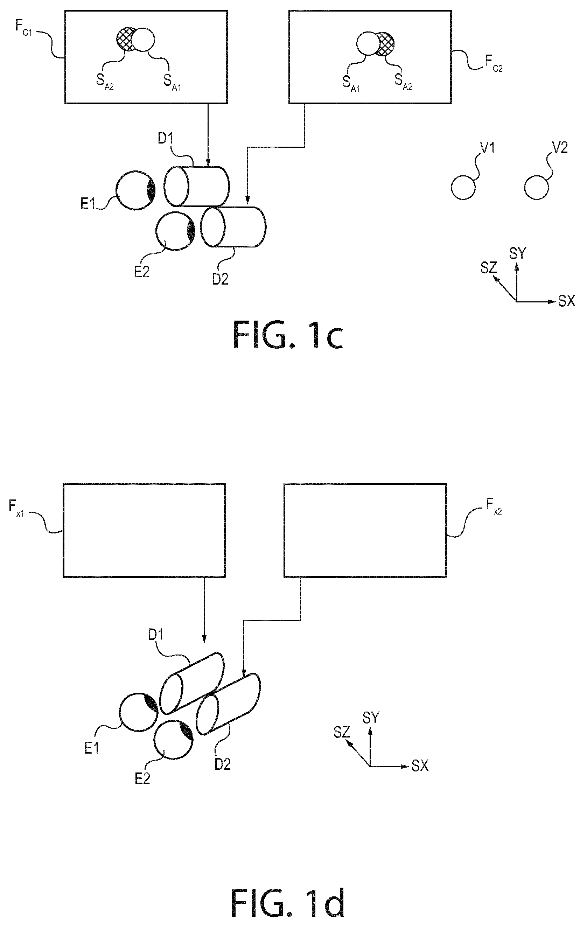

In this regard reference is first made to Figures 1a, 1b, 1c and 1d which shows a schematic block diagram of an exemplary configuration for forming a stereo image to user. In Figure 1a, a situation is shown where a human being is viewing two spheres A1 and A2 using both eyes E1 and E2. The sphere A1 is closer to the viewer than the sphere A2, the respective distances to the first eye E1 being $L_{E1,A1}$ and $L_{E1,A2}$. The different objects reside in space at their respective (x,y,z) coordinates, defined by the coordinate system SZ, SY and SZ. The distance $d_{12}$ between the eyes of a human being may be approximately 62-64 mm on average, and varying from person to person between 55 and 74 mm. This distance is referred to as the parallax, on which stereoscopic view of the human vision is based on. The viewing directions (optical axes) DIR1 and DIR2 are typically essentially parallel, possibly having a small deviation from being parallel, and define the field of view for the eyes.

In Figure 1b, there is a setup shown, where the eyes have been replaced by cameras C1 and C2, positioned at the location where the eyes were in Figure 1 a. The distances and directions of the setup are otherwise the same. Naturally, the purpose of the setup of Figure 1b is to be able to take a stereo image of the spheres A1 and A2. The two images resulting from image capture are $F_{C1}$ and $F_{C2}$. The "left eye" image $F_{C1}$ shows the image $S_{A2}$ of the sphere A2 partly visible on the left side of the image $S_{A1}$ of the sphere A1. The "right eye" image $F_{C2}$ shows the image $S_{A2}$ of the sphere A2 partly visible on the right side of the image $S_{A1}$ of the sphere A1. This difference between the right and left images is called disparity, and this disparity, being the basic mechanism with which the human visual system determines depth information and creates a 3D view of the scene, can be used to create an illusion of a 3D image.

In this setup of Figure 1b, where the inter-eye distances correspond to those of the eyes in Figure 1a, the camera pair C1 and C2 has a natural parallax, that is, it has the property of creating natural disparity in the two images of the cameras. Natural disparity may be understood to be created even though the distance between the two cameras forming the stereo camera pair is somewhat smaller or larger than the normal distance (parallax) between the human eyes, e.g. essentially between 40 mm and 100 mm or even 30 mm and 120 mm.

In Figure 1c, the creating of this 3D illusion is shown. The images $F_{C1}$ and $F_{C2}$ captured by the cameras C1 and C2 are displayed to the eyes E1 and E2, using displays D1 and D2, respectively. The disparity between the images is processed by the human visual system so that an understanding of depth is created. That is, when the left eye sees the image $S_{A2}$ of the sphere A2 on the left side of the image $S_{A1}$ of sphere A1, and respectively the right eye sees the image of A2 on the right side, the human visual system creates an understanding that there is a sphere V2 behind the sphere V1 in a three-dimensional world. Here, it needs to be understood that the images $F_{C1}$ and $F_{C2}$ can also be synthetic, that is, created by a computer. If they carry the disparity information, synthetic images will also be seen as three-dimensional by the human visual system. That is, a pair of computer-generated images can be formed so that they can be used as a stereo image.

Figure 1d illustrates how the principle of displaying stereo images to the eyes can be used to create 3D movies or virtual reality scenes having an illusion of being three-dimensional. The images $F_{X1}$ and $F_{X2}$ are either captured with a stereo camera or computed from a model so that the images have the appropriate disparity. By displaying a large number (e.g. 30) frames per second to both eyes using display D1 and D2 so that the images between the left and the right eye have disparity, the human visual system will create a cognition of a moving, three-dimensional image.

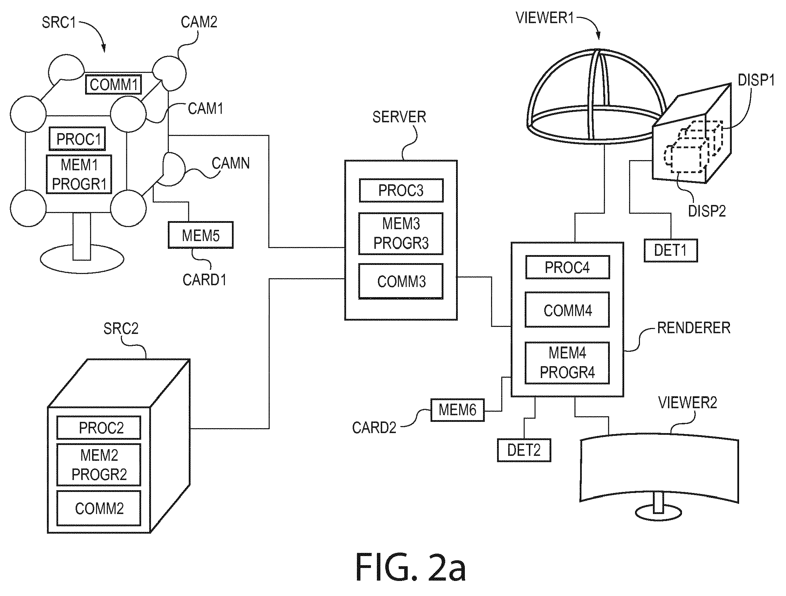

Figure 2a shows a system and apparatuses for stereo viewing, that is, for 3D video and 3D audio digital capture and playback. The task of the system is that of capturing sufficient visual and auditory information from a specific location such that a convincing reproduction of the experience, or presence, of being in that location can be achieved by one or more viewers physically located in different locations and optionally at a time later in the future. Such reproduction requires more information than can be captured by a single camera or microphone, in order that a viewer can determine the distance and location of objects within the scene using their eyes and their ears. As explained in the context of Figures 1 a to 1 d, to create a pair of images with disparity, two camera sources are used. In a similar manned, for the human auditory system to be able to sense the direction of sound, at least two microphones are used (the commonly known stereo sound is created by recording two audio channels). The human auditory system can detect the cues e.g. in timing difference of the audio signals to detect the direction of sound.

The system of Figure 2a may consist of three main parts: image sources, a server and a rendering device. A video capture device SRC1 comprises multiple (for example, 8) cameras CAM1, CAM2, ..., CAMN with overlapping field of view so that regions of the view around the video capture device is captured from at least two cameras. The device SRC1 may comprise multiple microphones to capture the timing and phase differences of audio originating from different directions. The device may comprise a high resolution orientation sensor so that the orientation (direction of view) of the plurality of cameras can be detected and recorded. The device SRC1 comprises or is functionally connected to a computer processor PROC1 and memory MEM1, the memory comprising computer program PROGR1 code for controlling the capture device. The image stream captured by the device may be stored on a memory device MEM2 for use in another device, e.g. a viewer, and/or transmitted to a server using a communication interface COMM1.

It needs to be understood that although an 8-camera-cubical setup is described here as part of the system, another camera device including different number of cameras and/or different location adjustment of cameras may be used instead as part of the system.

Alternatively or in addition to the video capture device SRC1 creating an image stream, or a plurality of such, one or more sources SRC2 of synthetic images may be present in the system. Such sources of synthetic images may use a computer model of a virtual world to compute the various image streams it transmits. For example, the source SRC2 may compute N video streams corresponding to N virtual cameras located at a virtual viewing position. When such a synthetic set of video streams is used for viewing, the viewer may see a three-dimensional virtual world, as explained earlier for Figure 1d. The device SRC2 comprises or is functionally connected to a computer processor PROC2 and memory MEM2, the memory comprising computer program PROGR2 code for controlling the synthetic source device SRC2. The image stream captured by the device may be stored on a memory device MEM5 (e.g. memory card CARD1) for use in another device, e.g. a viewer, or transmitted to a server or the viewer using a communication interface COMM2.

There may be a storage, processing and data stream serving network in addition to the capture device SRC1. For example, there may be a server SERV or a plurality of servers storing the output from the capture device SRC1 or computation device SRC2. The device comprises or is functionally connected to a computer processor PROC3 and memory MEM3, the memory comprising computer program PROGR3 code for controlling the server. The server may be connected by a wired or wireless network connection, or both, to sources SRC1 and/or SRC2, as well as the viewer devices VIEWER1 and VIEWER2 over the communication interface COMM3.

For viewing the captured or created video content, there may be one or more viewer devices VIEWER1 and VIEWER2. These devices may have a rendering module and a display module, or these functionalities may be combined in a single device. The devices may comprise or be functionally connected to a computer processor PROC4 and memory MEM4, the memory comprising computer program PROGR4 code for controlling the viewing devices. The viewer (playback) devices may consist of a data stream receiver for receiving a video data stream from a server and for decoding the video data stream. The data stream may be received over a network connection through communications interface COMM4, or from a memory device MEM6 like a memory card CARD2. The viewer devices may have a graphics processing unit for processing of the data to a suitable format for viewing as described with Figures 1c and 1d. The viewer VIEWER1 comprises a high-resolution stereo-image head-mounted display for viewing the rendered stereo video sequence. The head-mounted device may have an orientation sensor DET1 and stereo audio headphones. The viewer VIEWER2 comprises a display enabled with 3D technology (for displaying stereo video), and the rendering device may have a head-orientation detector DET2 connected to it. Any of the devices (SRC1, SRC2, SERVER, RENDERER, VIEWER1, VIEWER2) may be a computer or a portable computing device, or be connected to such. Such rendering devices may have computer program code for carrying out methods according to various examples described in this text.

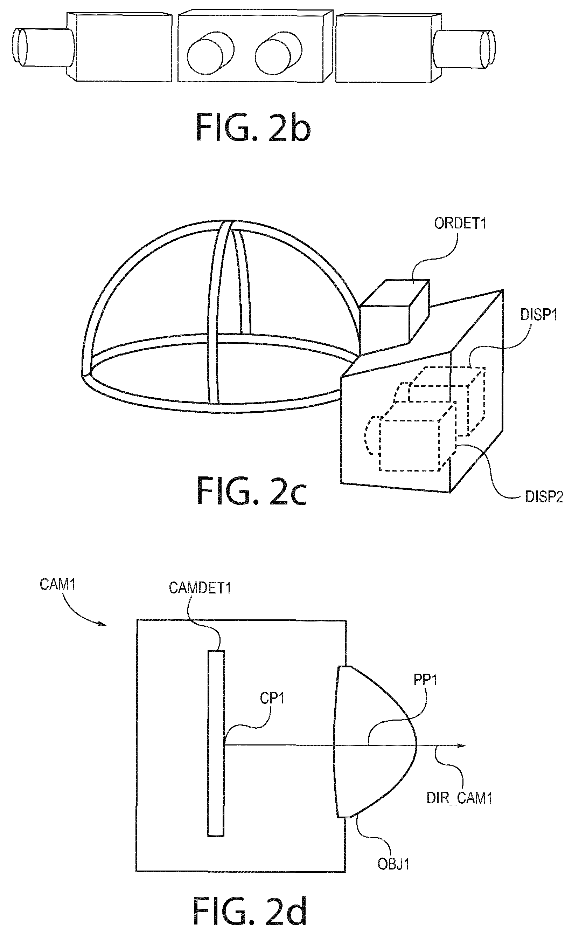

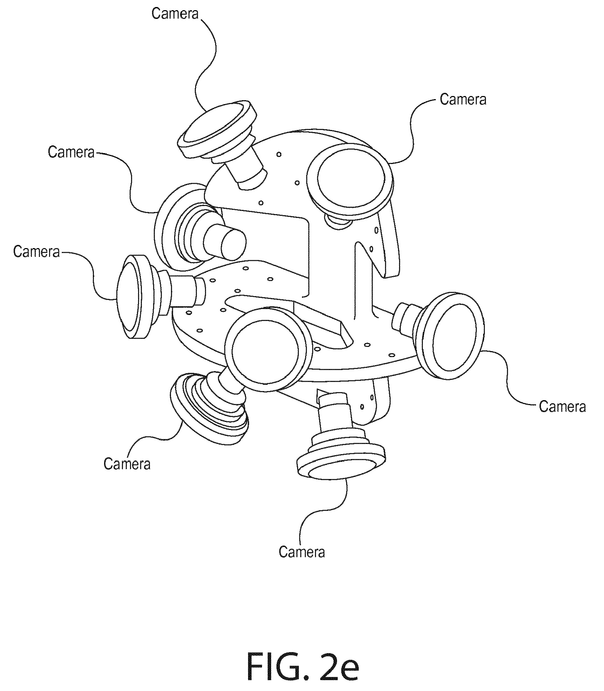

Figure 2b shows a camera device for adjustable stereo viewing. The camera device comprises three or more cameras that are configured into camera pairs for creating the left and right eye images, or that can be arranged to such pairs. The distance between cameras may correspond to the usual distance between the human eyes. The cameras may be arranged so that they have significant overlap in their field-of-view. For example, wide-angle lenses of 180 degrees or more may be used, and there may be 3, 4, 5, 6, 7, 8, 9, 10, 12, 16 or 20 cameras. The cameras may be regularly or irregularly spaced across the whole sphere of view, or they may cover only part of the whole sphere. For example, there may be three cameras arranged in a triangle and having a different directions of view towards one side of the triangle such that all three cameras cover an overlap area in the middle of the directions of view. In Figure 2b, three stereo camera pairs are shown. Figure 2e shows a further camera device for adjustable stereo viewing in which there are 8 cameras having wide-angle lenses and arranged regularly at the corners of a virtual cube and covering the whole sphere such that the whole or essentially whole sphere is covered at all directions by at least 3 or 4 cameras.

Camera devices with other types of camera layouts may be used. For example, a camera device with all the cameras in one hemisphere may be used. The number of cameras may be e.g. 3, 4, 6, 8, 12, or more. The cameras may be placed to create a central field of view where stereo images can be formed from image data of two or more cameras, and a peripheral (extreme) field of view where one camera covers the scene and only a normal non-stereo image can be formed. Examples of different camera devices that may be used in the system are described also later in this description.

Figure 2c shows a head-mounted display for stereo viewing. The head-mounted display contains two screen sections or two screens DISP1 and DISP2 for displaying the left and right eye images. The displays are close to the eyes, and therefore lenses are used to make the images easily viewable and for spreading the images to cover as much as possible of the eyes' field of view. The device is attached to the head of the user so that it stays in place even when the user turns his head. The device may have an orientation detecting module ORDET1 for determining the head movements and direction of the head. It is to be noted here that in this type of a device, tracking the head movement may be done, but since the displays cover a large area of the field of view, eye movement detection is not necessary. The head orientation may be related to real, physical orientation of the user's head, and it may be tracked by a sensor for determining the real orientation of the user's head. Alternatively or in addition, head orientation may be related to virtual orientation of the user's view direction, controlled by a computer program or by a computer input device such as a joystick. That is, the user may be able to change the determined head orientation with an input device, or a computer program may change the view direction (e.g. in gaming, the game program may control the determined head orientation instead or in addition to the real head orientation.

Figure 2d illustrates a camera CAM1. The camera has a camera detector CAMDET1, comprising a plurality of sensor elements for sensing intensity of the light hitting the sensor element. The camera has a lens OBJ1 (or a lens arrangement of a plurality of lenses), the lens being positioned so that the light hitting the sensor elements travels through the lens to the sensor elements. The camera detector CAMDET1 has a nominal center point CP1 that is a middle point of the plurality sensor elements, for example for a rectangular sensor the crossing point of the diagonals. The lens has a nominal center point PP1, as well, lying for example on the axis of symmetry of the lens. The direction of orientation of the camera is defined by the line passing through the center point CP1 of the camera sensor and the center point PP1 of the lens. The direction of the camera is a vector along this line pointing in the direction from the camera sensor to the lens. The optical axis of the camera is understood to be this line CP1-PP1.

The system described above may function as follows. Time-synchronized video, audio and orientation data is first recorded with the capture device. This can consist of multiple concurrent video and audio streams as described above. These are then transmitted immediately or later to the storage and processing network for processing and conversion into a format suitable for subsequent delivery to playback devices. The conversion can involve post-processing steps to the audio and video data in order to improve the quality and/or reduce the quantity of the data while preserving the quality at a desired level. Finally, each playback device receives a stream of the data from the network, and renders it into a stereo viewing reproduction of the original location which can be experienced by a user with the head mounted display and headphones.

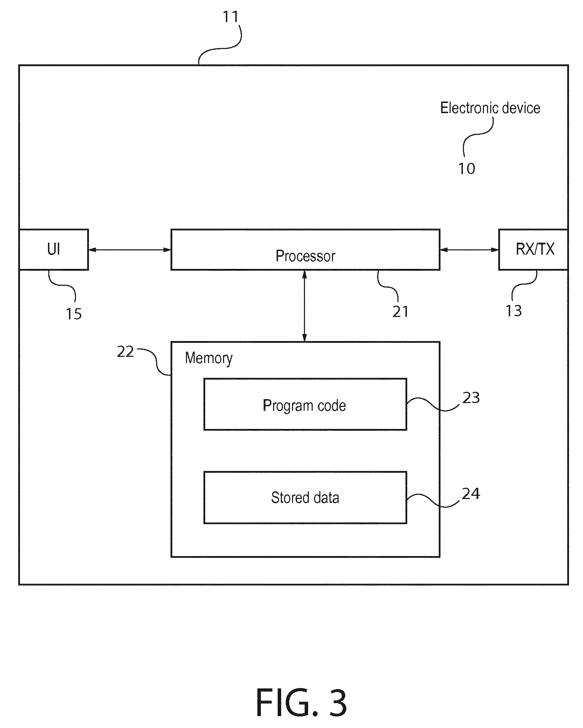

In general, embodiments of the invention can be embodied as an algorithm on an electronic device 10 such as that exemplary depicted in Figure 3. The electronic device 10 can be configured to execute an algorithm for the provision of exploiting the disparity between the left and right images in order to improve the encoding efficiency of stereoscopic imaging systems such as those depicted in Figures 1b to 1d. Furthermore said electronic device 10 may be a component of a stereoscopic imaging systems such as the systems depicted by of Figures 1b to 1d and Figures 2a to 2d.

The electronic device or apparatus 10 in some embodiments comprises a processor 21 which to a memory 22. The processor 21 can in some embodiments be configured to execute various program codes. The implemented program codes in some embodiments comprise a multichannel or stereo encoding or decoding code as described herein. The implemented program codes 23 can in some embodiments be stored for example in the memory 22 for retrieval by the processor 21 whenever needed. The memory 22 could further provide a section 24 for storing data, for example data that has been encoded in accordance with the application. The processor is further linked to an I/O (Input/Output) port 11 for receiving and transmitting digital data. For instance, the port 11 may be arranged to connect to the digital port of a camera or camera module. Additionally, the processor 21 is further linked to a transceiver (RX/TX) 13, to a user interface (UI) 15.

In some embodiments the apparatus 10 may additionally include an integrated camera module comprising a camera having a lens for focusing an image on to a digital image capture means such as a charged coupled device (CCD). In other embodiments the digital image capture means may be any suitable image capturing device such as complementary metal oxide semiconductor (CMOS) image sensor.

The user interface 15 enables a user to input commands to the electronic device 10, for example via a keypad, and/or to obtain information from the electronic device 10, for example via a display. In some embodiments a touch screen may provide both input and output functions for the user interface. The apparatus 10 in some embodiments comprises a transceiver 13 suitable for enabling communication with other apparatus, for example via a wireless communication network.

The encoding code in embodiments can be implemented in hardware and/or firmware.

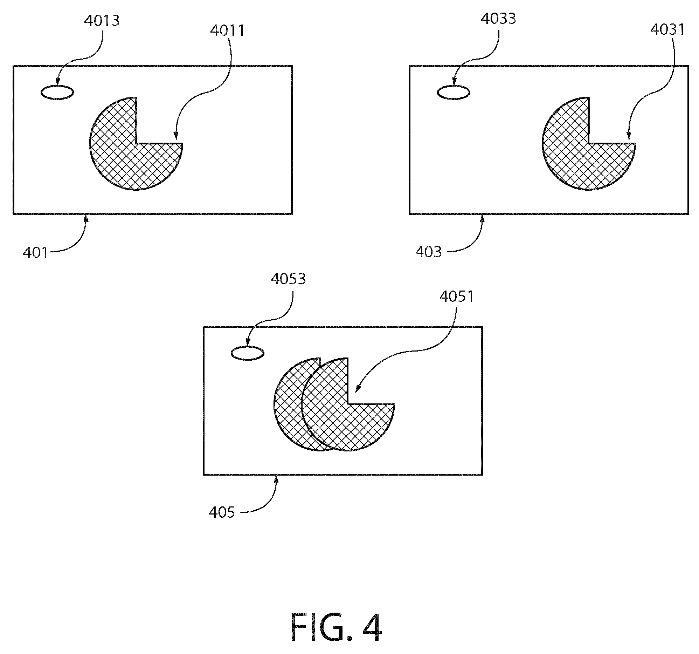

Figure 4 shows schematically the concept for embodiments as described herein, in which there is depicted by a left image 401 and right image 403 of a stereoscopic image as taken by a left camera and right camera arranged as a horizontal parallax pair such as that depicted in Figure 1 b. It should also be noted that a similar left and right image can be taken by a left and right camera arranged as vertical parallax pair.

The left image 401 is depicted as comprising a left view foreground object 4011 and with a background object/region 4013, and the right image 403 of the stereo image pair depicts the same scene/view from the right camera perspective with the right view foreground object 403 and a background region/object 4033.

Figure 4 also depicts the stereo or combined image in which the left image 401 and the right image 403 are combined as image 405. The combined left view objects 4011, 4013 and right view objects 4031 and 4033 are depicted as the objects 4051 and 4053. It is to be appreciated that the combined image 405 in Figure 4 depicts a disparity between the left view foreground image objects and the right view foreground image objects, thereby denoting that for these regions of the combined image the viewer's HVS will perceive a discernible difference in disparity between the pixel values depth of the right view image and the pixel values of the left view image. Also depicted in 405 is the combined background region 4053. This region of the combined image 405 is shown from the viewer's perspective of having a negligible perceived disparity between the pixels of the left view image and the pixels of the right view image. Consequently this region will exhibit no further discernible difference for the depth of the pixel values of the right image and the pixel values of the left image. There may be an actual disparity between the background pixel values of the right view image and the background pixels of the left view image, however the level of disparity may not be perceived depth by the HVS in a rendered stereoscopic image. Consequently, from a viewer's perspective the background region 4053 of the combined image 405 is deemed to have right and left view pixel values which are of disparity below a certain threshold at which any further variation in the pixel values cannot be perceived by a viewer's HVS. In other words, the viewer will perceive all the pixels within this region of the combined synthesised stereo image to have the same depth no matter to the actual disparity between the right view and left view pixel values.

The concept for embodiments as described herein is to determine regions of texture images where the disparity between the left and right view images can be considered to be negligible. This may be achieved by partitioning the respective depth map of each view into a foreground region and a background region. The foreground region may include objects or parts of the scene which are closer to the camera whilst the background region may comprise objects or parts of the scene which are farther from the camera. The foreground and background regions within each depth map image may be identified by applying a threshold to their respective depth map pixel values. For instance pixels whose depth map pixel values are below the threshold may be assigned to the background region, and those pixels whose depth map pixel values are above the threshold can be assigned to the foreground region. The respective foreground and background regions as identified from the depth map image views can then be mapped to their respective texture image views, in order that the texture image views reflect the same level of partitioning as the depth map image views. The background classified regions of the texture image views may then be encoded as a common region.

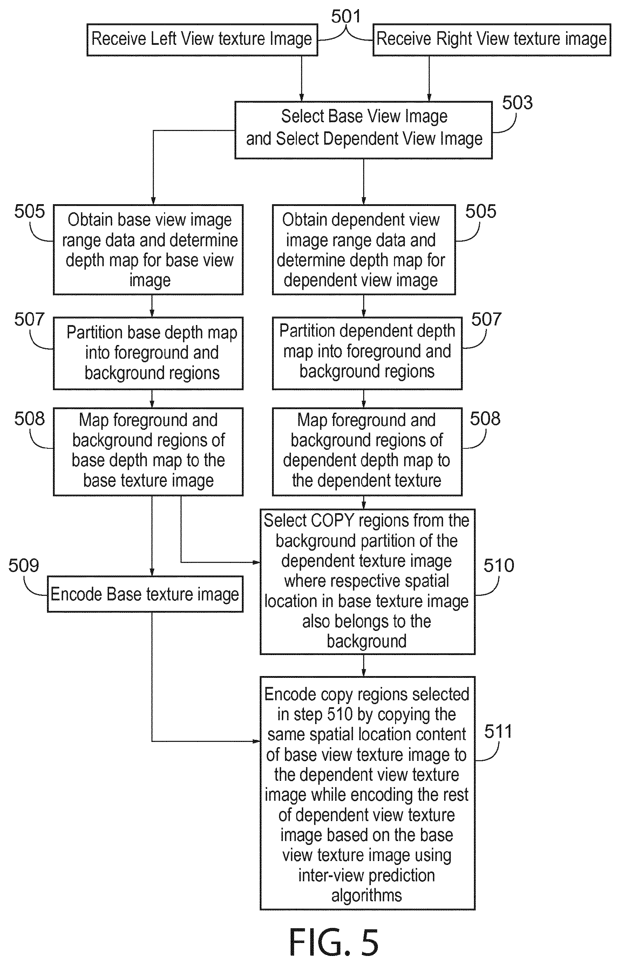

To that respect Figure 5 shows the operation of an encoder for the process of encoding the texture images associated with the left and right view images. The operation may execute on an electronic device 10 as shown of Figure 3.

Initially the device or entity arranged to perform the encoding of the stereoscopic image, such as the exemplary electronic device 10 of Figure 3, may be configured to receive the left and right images from a camera pair such as the camera arrangement shown in Figure 1b as C1 and C2.

The step of receiving the left and right view images from a camera pair arranged to capture a stereoscopic image is shown as processing step 501.

As mentioned above the encoding of the depth map images associated with the left and right stereoscopic images can be achieved by using a dependent based encoding system which can take into account the inter-view dependencies between left and right view images, in which one of the texture images associated with either the left or right view images is selected as the base texture image, and the other texture image is selected as the dependent texture image. For example, if the right view image is selected as the base image, then the right view texture image becomes the base texture image and the left view texture image becomes the dependent texture image. Dependency based encoding may then be performed for the left and right view texture images by encoding the base texture image and then encoding at least in part the difference between the base texture image and the dependent texture image. Therefore the encoder can be arranged to select which of the right and left view texture images will form the base texture image and conversely which of the right and left view texture images will form the dependent texture image for the encoding of the texture images.

The selection of the right and left view texture images as the basis of the respective base texture image and dependent texture image may be a pre-configured setting within the encoding architecture.

The selection of the right and left view texture images in order to form the respective base texture image and dependent texture image is shown as processing step 503 in Figure 5.

The depth value for each pixel of the base and dependent texture image may then be determined.

The depth value for each pixel location may be obtained by obtaining range data using the time-of-flight (TOF) principle for example by using a camera which may be provided with a light source, for example an infrared emitter, for illuminating the scene. Such an illuminator may be arranged to produce an intensity modulated electromagnetic emission for a frequency between e.g. 10-100 MHz, which may require LEDs or laser diodes to be used. Infrared light may be used to make the illumination unobtrusive. The light reflected from objects in the scene is detected by an image sensor, which may be modulated synchronously at the same frequency as the illuminator. The image sensor may be provided with optics; a lens gathering the reflected light and an optical band pass filter for passing only the light with the same wavelength as the illuminator, thus helping to suppress background light. The image sensor may measure for each pixel the time the light has taken to travel from the illuminator to the object and back. The distance to the object may be represented as a phase shift in the illumination modulation, which can be determined from the sampled data simultaneously for each pixel in the scene.

Alternatively or in addition to the above-described TOF-principle depth sensing, the range data or depth values may be obtained using a structured light approach which may operate for example approximately as follows. A light emitter, such as an infrared laser emitter or an infrared LED emitter, may emit light that may have a certain direction in a 3D space (e.g. follow a raster-scan or a pseudo-random scanning order) and/or position within an array of light emitters as well as a certain pattern, e.g. a certain wavelength and/or amplitude pattern. The emitted light is reflected back from objects and may be captured using a sensor, such as an infrared image sensor. The image/signals obtained by the sensor may be processed in relation to the direction of the emitted light as well as the pattern of the emitted light to detect a correspondence between the received signal and the direction/position of the emitted lighted as well as the pattern of the emitted light for example using a triangulation principle. From this correspondence a distance and a position of a pixel may be concluded.

Alternatively or in addition to the above-described depth sensing methods, it is possible to estimate the depth values only taking into account the available images, using stereo matching algorithms. Such depth estimation (stereo-matching) techniques are usually based on cost aggregation methods, where input 3D cost volume is calculated from pixel dissimilarity measured between given left and right images considering a number of depth hypothesized.

$$C(x, y, d) = \|L(x, y) - R(x - d, y)\|$$

Where

    $C$ denotes resulting cost volume (associated with the left image)
    $L$ and $R$ are left and right images
    $(x,y)$ are spatial coordinates within the image
    $d$ is a disparity hypothesis

For unrectified images, the whole image can be swept in order to compute the cost volume, where depth hypothesizes are sampled according to the desired rule.

It is to be understood that the above-described depth estimation and sensing methods are provided as non-limiting examples and embodiments may be realized with the described or any other depth estimation and sensing methods and apparatuses.

The step of obtaining range data and determining the depth maps for each of the left and right view images and thereby forming the dependent depth map image and base depth map image is shown as processing step 505 in Figure 5.

For both base and dependent depth map images, the depth value of each pixel may be compared against a threshold level in order to determine whether the value of the pixel can be classified as being below the level at which any further decrease in the value of the pixel will not result in a discernible difference perceived between the perception of the left and right view texture image in a rendered stereoscopic image. The threshold level may be considered to represent a point of saturation for the perception of depth by the HVS in a rendered stereoscopic image. The depth map pixels whose values meet this threshold level may be classified as background pixels. This may be applied to both base and dependent depth map image views by partitioning each depth map image to a foreground and a background region respectively.

The comparison may be performed for all pixels of both the base and dependent depth map image views in order to identify regions of the image which can be classified as background regions.

The remaining regions of the of the based and dependent depth map image views, in other words the region of the image consisting of the depth map image pixel values which are above the threshold, can be termed the foreground regions of the base and dependent view depth map image views respectively.

Therefore, in essence the pixels of the base and dependent view depth map image views can be partitioned in to background and foreground regions in accordance with the threshold value.

The step of partitioning the base and dependent depth map image views each into background and foreground regions is shown as processing step 507 in Figure 5.

The background and foreground regions as identified by the previous processing step can be mapped to their respective texture image views. Such that spatial locations of the background pixels of the base depth map image view are mapped to the base texture image view in order to form the background region for the base texture image view, the spatial locations of the foreground pixels of the base depth map image view are mapped to the base texture image view in order to form the foreground region of the base texture image view, the spatial locations of the background pixels of the dependent depth map image view are mapped to the dependent texture image view in order to form the background region for the dependent texture image view and the spatial locations of the foreground pixels of the dependent depth map image view are mapped to the dependent texture image view in order to form the dependent region of the dependent texture image view.

The step of mapping the foreground and background regions to the base and dependent texture image views from the respective depth maps is shown as processing step 508 in Figure 5.

The step of encoding the base texture image view as a complete image is depicted as the processing step 509 in Figure 5.

As mentioned previously the encoding of the dependent texture image view is conducted with reference to the encoded base texture image view. With respect to the regions which have been classified as background regions in the dependent texture image view the encoding of such regions can be represented by a moniker such as COPY. This moniker simply denotes that at least some of the pixel values of background regions of the dependent texture image view can be substituted by similar spatial location pixel values from the corresponding background regions of the base texture image view. In other words the values of at least some of the pixels of the background region for the dependent texture image view can be substituted (or replaced) by the values of similar spatial location corresponding pixels from the base texture image view. In embodiments the criteria for determining the copy regions from the base texture image view for substitution in the dependent texture image view may be formulated as 1) the substituting pixels belong to the background partition of both the base texture image view and the dependent texture image view and 2) said substituting pixels should have the same spatial location within the base texture image view as the pixels (to be substituted) in the background partition of the dependent texture image view.

The step of determining the regions from the base texture image view which will be substituted in the dependent image view is depicted as the processing step 510 in Figure 5.

As explained above the encoding of the background regions for the dependent texture image view can take the form of determining corresponding regions in the base texture image view which can be substituted into the appropriate background regions (which is also known as the copy regions) of the dependent texture image view. This has the effect that there is no encoding effort allocated to the so called copy regions of the dependent texture image view. Moreover, an additional effect of this process is that the encoding of the copy regions of the dependent texture image view only requires signalling information to indicate the copying from similar spatial location from the already encoded base view corresponding regions.

The other spatial locations relating to the pixels of the foreground region of the dependent texture image view, in other words the remaining region which do not belong to the so called copy region can be encoded with respect to the encoded base texture image view using conventional inter-view prediction methods.

The step of encoding the foreground and background regions of the dependent texture image view is depicted as the processing step 511 in Figure 5.

It is to be appreciated that some embodiments may deploy a block based approach to the encoding of the base texture image view at processing step 509. For these embodiments the processing step 505 may further comprise the additional stage of converting the base depth map image view and dependent depth map image view into a base disparity map image view and a dependent disparity map image view respectively.

In this case the disparity image map for each of the base view depth map image and dependent view depth map image may be given by converting each depth map pixel level value to an equivalent disparity level value by the means of the following equation

$$D = f \times l \times \left( \frac{d}{2^N - 1} \times \left( \frac{1}{Z_{near}} - \frac{1}{Z_{far}} \right) + \frac{1}{Z_{far}} \right)$$

where $D$, is the disparity value for a pixel of the dependent or base view image,
$f$ is the focal length of the capturing camera,
$l$ is the translational difference between cameras,
$d$ is the depth value for a pixel of the dependent or base view depth map image,
$N$ is the number of bits representing the depth values,
$Z_{near}$ and $Z_{far}$ are the respective distances of the closest and the furthest objects in the scene to the camera.

In embodiments the threshold value at which a depth map pixel value where the disparity between the left and right views can be considered to be negligible in a rendered stereoscopic image, despite further fluctuations to the depth map pixel values below the threshold value, may be determined by different approaches as described in the following embodiments.

In one embodiment, the threshold is fixed to a pre-defined value e.g. if depth map pixel values range from 0 to 255 (0 representing the farthest part of the scene and 255 representing the closest part of the scene) it is defined as a value closer to 0. In some embodiments this may be fixed to factor such as 0.2, such that the threshold value may be 0.2x255 = 51. It should be noted that the factor may be selected experimentally to provide an advantageous effect.

In another embodiment, the threshold is adaptively determined in accordance with the pixel values of the depth map image view. This may be realised by taking the minimum and maximum pixel values of the depth map image view and determining the threshold adaptively based on the values. This enables the threshold to be adaptive to the actual range of pixel values in the depth map image view. In this embodiment the threshold can be defined with respect to the minimum depth map image view pixel value.

$$threshold = \text{minimum} + \beta \times \frac{maximum - \text{minimum}}{2}$$

It should be noted that the value β may be selected by experimental means.

In yet another embodiment, the threshold can also be adaptively determined in accordance with the pixel values of the depth map image view by calculating the mean or the average of the pixel values, such that the threshold is

$$threshold = \beta \times mean$$

Where again the value of β can be selected by experimental means. For example a value of β of 0.4 was found to give an advantageous result. In another embodiment the median value of the pixels of the depth map image view may be used instead of the mean value.

In another embodiment, the threshold may be determined in accordance with the relative frequency of each pixel value within the depth map image view. This may be produced as a distribution of pixel values in the form of a histogram. A specific percentage of depth map pixel values may then be considered to be the background region, For example a proportion of 20% of the depth map image view pixels may be considered as belonging to the background region. It should be noted that the value 20% may be selected according to experimental means by counting the number of pixels that should be allocated to the background for example 20% x total number of pixels. Following this, the smallest depth values form the histogram are selected until the accumulated number of pixels of each bar in the histogram (each bar representing the number of pixels for one depth value) reaches the number of pixels that should be allocated to the background. This will result in selecting a specific number of bars in the histogram. All the pixels having a smaller or equal value as the largest depth value representing the selected bars are considered to belong to the background region, while the remaining pixels belong to the foreground region.

Another embodiment may combine two or more of the aforementioned embodiments to determine the threshold value.

Although the above examples describe embodiments of the application operating within a within an apparatus 10, it would be appreciated that the invention as described below may be implemented as part of any stereoscopic capture apparatus.

User equipment may comprise a stereoscopic video capture and recording device or module such as those described in embodiments of the application above.

It shall be appreciated that the term user equipment is intended to cover any suitable type of wireless user equipment, such as mobile telephones, portable data processing devices or portable web browsers.

Furthermore elements of a public land mobile network (PLMN) may also comprise elements of a stereoscopic video capture and recording device as described above.

In general, the various embodiments of the application may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the application may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this application may be implemented by computer software executable by a data processor of the mobile device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the application may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs can automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As used in this application, the term 'circuitry' refers to all of the following:

(a) hardware-only circuit implementations (such as implementations in only analog and/or digital circuitry) and
(b) to combinations of circuits and software (and/or firmware), such as: (i) to a combination of processor(s) or (ii) to portions of processor(s)/software (including digital signal processor(s)), software, and memory(ies) that work together to cause an apparatus, such as a mobile phone or server, to perform various functions and
(c) to circuits, such as a microprocessor(s) or a portion of a microprocessor(s), that require software or firmware for operation, even if the software or firmware is not physically present.

This definition of 'circuitry' applies to all uses of this term in this application, including any claims. As a further example, as used in this application, the term 'circuitry' would also cover an implementation of merely a processor (or multiple processors) or portion of a processor and its (or their) accompanying software and/or firmware. The term 'circuitry' would also cover, for example and if applicable to the particular claim element, a baseband integrated circuit or applications processor integrated circuit for a mobile phone or similar integrated circuit in server, a cellular network device, or other network device.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, all such and similar modifications of the teachings of this invention will still fall within the scope of this invention as defined in the appended claims.

**Claims**

**1.** An apparatus configured to;

determine a depth map image of a first view texture image and a depth map image of a second view texture image from ranging information for the first view texture image and the second view texture image respectively;
partition the depth map image of the first view texture image and second view texture image each into a foreground region and a background region;
map the foreground and the background regions of the first depth map of the first view texture image to the first view texture image;
map the foreground and the background regions of the second depth map of the second view texture image to the second view texture image;
encode the first view texture image; and
encode at least part of the second view texture image by the apparatus being configured to select at least one second view texture pixel of the background region of the second view texture image and substitute the value of the at least one second view texture pixel with a value of a corresponding at least one first view texture pixel from the encoded first view texture image.

2. The apparatus as claimed in Claim 1, wherein the corresponding at least first view texture pixel is a pixel from the background region of the first view texture image.

3. The apparatus as claimed in Claims 1 and 2, wherein the at least one second view texture pixel has a spatial location in the background region of the second view texture image which is the same as a spatial location of the corresponding at least one first view texture pixel in the background region of the first view texture image.

4. The apparatus as claimed in Claims 1 to 3, wherein the apparatus configured to partition the depth map image for the first view texture image and second view texture image each into a foreground region and a background region comprises that at least one pixel of a depth map image meets a threshold value and classifying the at least one pixel as a background region of the depth map image.

5. The apparatus as claimed in Claims 1 to 3, wherein the apparatus configured to partition the depth map image for the first view texture image and second view texture image each into at least one foreground region and at least one background region is configured to:

compare at least one pixel value of a depth map image against a threshold value;
determine that the at least one pixel value is below the threshold value; and
classifiy the at least one pixel value with at least one background region of the depth map image.

6. The apparatus as claimed in Claims 4 and 5, wherein the threshold represents a pixel value of the depth map image at which there is no perceived disparity between the first view texture image and the second view texture image.

7. The apparatus as claimed in Claims 4 to 6, wherein the threshold is based on a weighted mean pixel value of the depth map image.

8. The apparatus as claimed in Claims 4 to 7, wherein the threshold is based on a weighted median pixel value of the depth map image.

9. The apparatus as claimed in Claims 4 to 7, wherein the threshold is based on the difference between a maximum pixel value and a minimum pixel value of the depth map image.

10. The apparatus as claimed in Claim 4 to 7, wherein the threshold is based on a histogram of pixel values of the depth map image.

11. The apparatus as claimed in Claims 1 to 11, wherein the first view texture image and the second view texture image are captured by a stereoscopic camera arrangement.

12. A method comprising;

determining a depth map image of a first view texture image and a depth map image of a second view texture image from ranging information for the first view texture image and the second view texture image respectively;
partitioning the depth map image of the first view texture image and second view texture image each into a foreground region and a background region;
mapping the foreground and the background regions of the first depth map of the first view texture image to the first view texture image;
mapping the foreground and the background regions of the second depth map of the second view texture image to the second view texture image;
encoding the first view texture image; and
encoding at least part of the second view texture image by selecting at least one second view texture pixel of the background region of the second view texture image and substituting the value of the at least one second view texture pixel with a value of a corresponding at least one first view texture pixel from the encoded first view texture image.

13. The method as claimed in Claim 12, wherein the corresponding at least first view texture pixel is a pixel from the background region of the first view texture image.

**14.** The method as claimed in Claims 12 and 13, wherein partitioning the depth map image for the first view texture image and second view texture image each into a foreground region and a background region comprises that at least one pixel of a depth map image meets a threshold value and classifying the at least one pixel as a background region of the depth map image.

**15.** The method as claimed in Claim 14, wherein the threshold represents a pixel value of the depth map image at which there is no perceived disparity between the first view texture image and the second view texture image.

FIG. 1a

FIG. 1b

$F_{C1}$

$S_{A2}$   $S_{A1}$

$S_{A1}$   $S_{A2}$   $F_{C2}$

D1

V1   V2

E1

E2   D2

SY

SZ

SX

# FIG. 1c

$F_{x1}$

$F_{x2}$

D1

E1

E2   D2

SY

SZ

SX

# FIG. 1d

FIG. 2a

EP 3 267 682 A1

FIG. 2b

ORDET1

DISP1

DISP2

FIG. 2c

CAM1

CAMDET1

CP1

PP1

DIR_CAM1

OBJ1

FIG. 2d

Camera

Camera

Camera

Camera

Camera

Camera

Camera

FIG. 2e

FIG. 3

FIG. 4

EP 3 267 682 A1

501

| Receive Left View texture Image | Receive Right View texture image |

503

Select Base View Image
and Select Dependent View Image

505 — Obtain base view image range data and determine depth map for base view image

Obtain dependent view image range data and determine depth map for dependent view image — 505

507 — Partition base depth map into foreground and background regions

Partition dependent depth map into foreground and background regions — 507

508 — Map foreground and background regions of base depth map to the base texture image

Map foreground and background regions of dependent depth map to the dependent texture — 508

Select COPY regions from the background partition of the dependent texture image where respective spatial location in base texture image also belongs to the background — 510

509 — Encode Base texture image

Encode copy regions selected in step 510 by copying the same spatial location content of base view texture image to the dependent view texture image while encoding the rest of dependent view texture image based on the base view texture image using inter-view prediction algorithms — 511

# FIG. 5

Europäisches
Patentamt

European
Patent Office

Office européen
des brevets

# EUROPEAN SEARCH REPORT

Application Number

EP 16 17 8137

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/269736 A1 (HANNUKSELA MISKA MATIAS [FI] ET AL) 24 September 2015 (2015-09-24) * paragraph [0055] * * paragraph [0073] * * paragraph [0075] * * paragraphs [0078] - [0088] * * paragraphs [0099] - [0105] * * paragraphs [0110] - [0113] * * paragraphs [0121] - [0122] * * paragraphs [0125] - [0128] * * paragraphs [0138], [0143] - [0144] * * paragraphs [0148] - [0163] * ----- | 1-15 | INV. H04N13/00 G06T7/00 H04N19/597 |
| A | SHU-FA LIN CHE-YU CHANG CHE-CHUN SU YI-LUN LIN CHIA-HO PAN HOMER CHEN ET AL: "Joint Adaptive Background Skipping and Weighted Bit Allocation for Wireless Video Telephony", WIRELESS NETWORKS, COMMUNICATIONS AND MOBILE COMPUTING, 2005 INTERNATI ONAL CONFERENCE ON MAUI, HI, USA 13-16 JUNE 2005, PISCATAWAY, NJ, USA,IEEE, vol. 2, 13 June 2005 (2005-06-13), pages 1243-1248, XP010888138, ISBN: 978-0-7803-9305-9 * section 3 * ----- | 1-15 | |
| A | Linda S Karlsson: "Spatio-temporal pre-processing methods for region-of-interest video coding", , 1 January 2007 (2007-01-01), XP055206203, Sundsvall ISBN: 978-9-18-531745-5 Retrieved from the Internet: URL:http://libris.kb.se/resource/bib/10405 302 * section 4.2.2 section 4.6 * ----- | 1-15 | TECHNICAL FIELDS SEARCHED (IPC) H04N G06T |

The present search report has been drawn up for all claims

| Place of search | Date of completion of the search | Examiner |
|---|---|---|
| The Hague | 13 December 2016 | Borcea, Veronica |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................
& : member of the same patent family, corresponding document

EPO FORM 1503 03.82 (P04C01)

**EP 3 267 682 A1**

## ANNEX TO THE EUROPEAN SEARCH REPORT
## ON EUROPEAN PATENT APPLICATION NO.

EP 16 17 8137

This annex lists the patent family members relating to the patent documents cited in the above-mentioned European search report.
The members are as contained in the European Patent Office EDP file on
The European Patent Office is in no way liable for these particulars which are merely given for the purpose of information.

13-12-2016

| Patent document cited in search report | Publication date | Patent family member(s) | Publication date |
|---|---|---|---|
| US 2015269736 A1 | 24-09-2015 | EP 2922021 A1 | 23-09-2015 |
| | | GB 2524478 A | 30-09-2015 |
| | | US 2015269736 A1 | 24-09-2015 |

EPO FORM P0459

For more details about this annex : see Official Journal of the European Patent Office, No. 12/82